# EUROPÄISCHE PATENTSCHRIFT

(11) **EP 4 116 690 B1**
(45) Veröffentlichungstag und Bekanntmachung des Hinweises auf die Patenterteilung: **26.02.2025**
(21) Anmeldenummer: 21184907.0
(22) Anmeldetag: 09.07.2021
(51) Int. Cl.: G01L 15/00, G01M 3/28, G01M 3/32, G01D 1/10

(54) **MESSVERFAHREN UND MESSANORDNUNG**
MEASURING DEVICE AND MEASURING ASSEMBLY
PROCÉDÉ DE MESURE ET DISPOSITIF DE MESURE

(43) Veröffentlichungstag der Anmeldung: 11.01.2023
(73) Patentinhaber: VEGA Grieshaber KG, 77709 Wolfach (DE)
(72) Erfinder: Isenmann, Andreas, 77716 Haslach i. K. (DE); Hengstler, Clemens, 77716 Haslach (DE); Burgert, Florian, 77723 Gengenbach (DE)
(74) Vertreter: Mixa, Stephan Johannes

(56) Entgegenhaltungen:
- EP-A1- 3 605 031
- US-A1- 2004 182 167
- US-A1- 2007 186 623
- US-A1- 2021 026 001

## Beschreibung

Die Erfindung betrifft ein Messverfahren zur Bestimmung eines Messergebnisses und eine Messanordnung zur Bestimmung eines Messergebnisses.

In der industriellen Messtechnik, insbesondere im Bereich der Prozessautomation und der Prozesssteuerung, werden regelmäßig Messapparate, beispielsweise Feldgeräte, zur Erfassung einer oder mehrerer Prozessvariablen oder Prozessmessgrößen eingesetzt. Zu den Feldgeräten zählen insbesondere Durchfluss-, Fließgeschwindigkeits-, Druck-, Differenzdruck-, Temperatur- sowie Füllstandmessgeräte. Mittels eines entsprechenden Messapparats oder einer entsprechenden Messanordnung erfassen die Feldgeräte in der Regel ein Messsignal, welches mit einer oder mehreren Messgrößen korreliert. Zur Bestimmung gewisser Messergebnisse kann es notwendig sein, Messwerte durch mehrere Messapparate zu erfassen, zum Beispiel zur Bestimmung eines Differenzdrucks. Eine Verarbeitung der durch die Messapparate gemessenen Werte erfolgt durch eine zentrale Stelle, zum Beispiel durch einen SPS-Rechner oder eine sonstige Steuereinheit, die für die Auswertung der durch die Messapparate gemessenen Werte speziell konfiguriert bzw. programmiert sein muss.

Aus der Druckschrift US 2004/182167 A1 ist eine Vorrichtung zur Druckmessung bekannt. Die Vorrichtung weist einen Sensor zur Messung eines Absolutdrucks sowie einen Sensor zur Messung eines Atmosphärendrucks auf. Ein Relativdruck wird bestimmt, indem eine Differenz zwischen dem Absolutdruck und dem Atmosphärendruck gebildet wird. Die Druckschrift US 2007/186623 A1 beschreibt ein Leckerkennungssystem, das überprüft, ob sich ein in einem Flüssigkeitsbehälter befindlicher Masseninhalt ändert. Ein Signalwandler des Leckerkennungssystems gibt einen Differenzdruck in dem Flüssigkeitsbehälter aus. Das Leckerkennungssystem kann den Masseninhalt besonders genau ermitteln, da es ergänzend zu dem Differenzdruck auch einen von einem Drucksensor gemessenen Umgebungsdruck sowie eine von einem Temperatursensor gemessene Temperatur berücksichtigt.

Die Druckschrift US 2021/026001 A1 betrifft eine Radarsensoreinrichtung zur Füllstandmessung in einem Container. Wenn mehrere Container übereinandergestapelt werden, kann es aufgrund von Reflektionen zu Fehlmessungen kommen. Um entsprechende Effekte korrigieren zu können, werden Radarwellen nicht nur in Richtung einer in dem Container befindlichen Flüssigkeit ausgesandt, sondern auch in eine entgegengesetzte Richtung. Die Druckschrift EP 3 605 031 A1 beschreibt einen Radarsensor zur Füllstand- oder Grenzstandmessung. Der Radarsensor weist eine Sensoreinheit auf, die ein Radarsignal durch eine Gehäusewand hindurch abstrahlen und empfangen kann.

Der Erfindung liegt demgegenüber die Aufgabe zugrunde, ein Messverfahren sowie eine Messanordnung bereitzustellen, die eine Bestimmung einer Dichte eines Füllmaterials in einem Behältnis erlaubt, wobei keine Messungen außerhalb des Behältnisses vorgenommen werden müssen. Die Aufgabe wird gelöst durch Angabe des Messverfahrens nach Anspruch 1 sowie der Messanordnung nach Anspruch 9. Die Unteransprüche betreffen verschiedene voneinander unabhängige, vorteilhafte Weiterbildungen der vorliegenden Erfindung, deren Merkmale vom Fachmann im Rahmen des technisch Sinnvollen frei miteinander kombiniert werden können. Dies gilt insbesondere auch über die Grenzen der verschiedenen Anspruchskategorien hinaus.

Gemäß einem ersten Aspekt der Erfindung wird ein Messverfahren zur Bestimmung eines Messergebnisses angegeben, das die folgenden Schritte umfasst: Messung einer Messgröße durch einen ersten Messapparat an einer Messstelle, wobei der erste Messapparat einen ersten Messwert ermittelt, Messung einer Referenzmessgröße durch einen zweiten Messapparat, wobei der zweite Messapparat einen zweiten Messwert ermittelt, Datenübertragung des zweiten Messwerts von dem zweiten Messapparat an den ersten Messapparat und Bestimmung des Messergebnisses durch den ersten Messapparat unter Verwendung des ersten Messwerts und des zweiten Messwerts. Dabei ist die Messgröße ein Druck in einem Behältnis wie einem Tank, einem Rohr oder dergleichen und der erste Messapparat weist einen Drucksensor auf. Erfindungsgemäß ist die Referenzmessgröße ein Abstand zwischen dem zweiten Messapparat und einem Füllpegel eines Füllmaterials in dem Behältnis, und das Messergebnis ist eine Dichte des Füllmaterials, wobei der zweite Messapparat einen Abstandssensor aufweist. Die Dichte des Füllmaterials kann auf Grundlage des Füllpegels und des in dem Behältnis herrschenden hydrostatischen Drucks berechnet werden, gegebenenfalls unter Verwendung weiterer Hilfsgrößen. Es ist erfindungsgemäß möglich, dass es sich bei dem Abstandssensor um einen Radarsensor handelt, es kann sich dabei aber auch um einen Abstandssensor sonstiger Art handeln.

Die Messapparate können Sensoren beliebiger Art aufweisen. Die Messapparate können ferner Kommunikationsmittel aufweisen, zum Beispiel Netzwerkadapter zur Kommunikation über drahtgebundene und/oder drahtlose Netzwerke. Die Datenübertragung zwischen dem ersten Messapparat und dem zweiten Messapparat kann also beispielsweise über ein drahtgebundenes oder ein drahtloses Netzwerk erfolgen, oder auch über eine Direktverbindung.

Das Verfahren kann erfindungsgemäß so ausgestaltet sein, dass dabei mindestens ein Zusatzmessapparat die Referenzmessgröße misst, wobei der mindestens eine Zusatzmessapparat einen Zusatzmesswert ermittelt, wobei eine Datenübertragung des Zusatzmesswerts von dem Zusatzmessapparat an den ersten Messapparat erfolgt, und wobei der erste Messapparat vor der Bestimmung des Messergebnisses den zweiten Messwert mit dem Zusatzmesswert vergleicht, um den zweiten Messwert zu verwerfen und/oder zu korrigieren. Somit wird die Referenzmessgröße durch unterschiedliche Geräte gemessen. Messfehler können korrigiert werden. Außerdem ist bei einem Ausfall des zweiten Messapparats eine weitere Möglichkeit zum Bezug der Referenzmessgröße durch den ersten Messapparat gegeben. Falls der erste Messapparat den zweiten Messwert verwirft, dann kann er erfindungsgemäß stattdessen den Zusatzmesswert zur Bestimmung des Messergebnisses verwenden, oder er kann darauf warten, dass er einen weiteren Messwert von dem zweiten Messapparat erhält.

Wenn mehrere Zusatzmessapparate vorhanden sind, dann erhält der erste Messapparat mehrere Zusatzmesswerte. Das Verfahren kann erfindungsgemäß so ausgebildet sein, dass der erste Messapparat ein Votingverfahren durchführt. Das Verfahren nutzt somit Redundanzen aus. So kann erfindungsgemäß ein Votingverfahren gemäß dem Ioo2-Prinzip, gemäß dem 2oo2-Prinzip, gemäß dem 2oo3-Prinzip oder gemäß verwandter Votingverfahren ausführen. Es ist besonders vorteilhaft, wenn der erste Messapparat in Abhängigkeit von der Anzahl der vorhandenen Zusatzmessapparate beziehungsweise der Anzahl der von diesen zur Verfügung gestellten Zusatzmesswerten ein geeignetes Votingverfahren auswählt. Gemäß einem Beispiel könnte bei Vorhandensein nur eines Zusatzmessapparats ein Voting nach dem 2oo2-Prinzip durchgeführt werden, und bei Zuschaltung eines weiteren Zusatzmessapparats könnte der erste Messapparat automatisch umschalten auf ein Voting nach dem 2oo3-Prinzip. Neben den benannten Votingverfahren kann der Fachmann auch sonstige Verfahren zur Fehlerkorrektur verwenden, die beim Bezug von Messwerten unterschiedlicher Messstellen denkbar sind, zum Beispiel eine Bildung eines Mittelwerts aus den erhaltenen Messwerten.

Gemäß einer weiteren Variante des erfindungsgemäßen Verfahrens misst ein Zusatzmessapparat die Referenzmessgröße, wobei der mindestens eine Zusatzmessapparat einen Zusatzmesswert ermittelt, wobei eine Datenübertragung des Zusatzmesswerts von dem Zusatzmessapparat an den zweiten Messapparat erfolgt, und wobei der zweite Messapparat den zweiten Messwert mit dem Zusatzmesswert vergleicht und ein Fehlersignal ausgibt, falls eine Differenz zwischen dem zweiten Messwert und dem Zusatzmesswert einen Grenzwert überschreitet. Auf diese Weise kann der zweite Messapparat prüfen, ob seine Messungen noch korrekt sind. Falls die von dem zweiten Messapparat und dem Zusatzmessapparat gemessenen Werte zu stark voneinander abweichen, dann ist es möglich, dass mindestens einer der beiden Messapparate defekt ist oder neu geeicht werden muss. Gemäß der beschriebenen Variante des Verfahrens können sich eine Vielzahl von Messapparaten untereinander Messwerte betreffend die Referenzmessgröße zukommen lassen und somit überprüfen, ob sie noch korrekt funktionieren.

Vorzugsweise misst der erste Messapparat zusätzlich zu der Messgröße die Referenzmessgröße, wobei der erste Messapparat einen dritten Messwert ermittelt, und wobei eine Datenübertragung des dritten Messwerts von dem der ersten Messapparat an mindestens einen dritten Messapparat erfolgt. Falls der erste Messapparat einen dazu geeigneten Sensor aufweist, dann ist es möglich, dass der erste Messapparat auch die Referenzmessgröße misst. In einem System mit mehreren Messapparaten ist somit kein gesonderter Messapparat notwendig, der ausschließlich zur Messung des Atmosphärendrucks ausgebildet ist - die benötigten Messwerte werden von dem ersten Messapparat ermittelt.

Es ist vorteilhaft, wenn der erste Messapparat eine Anfrage verschickt, woraufhin der zweite Messapparat die Anfrage empfängt und die Referenzmessgröße misst, um den zweiten Messwert zu ermitteln. Die Anfrage kann erfindungsgemäß zum Beispiel über ein Netzwerk empfangen werden oder über eine beliebige andere Datenverbindung, die erfindungsgemäß auch drahtlos ausgeführt sein kann. Die Messung der Referenzmessgröße wird somit durch eine Abfrage im Rahmen eines Polling-Verfahrens ausgelöst. Es sind jedoch auch Ausführungsformen der erfindungsgemäßen Verfahrens möglich, bei denen der zweite Messapparat die Messung der Referenzmessgröße selbst auslöst. So kann beispielsweise die Referenzmessgröße von dem zweiten Messapparat in einem regelmäßigen zeitlichen Abstand gemessen werden.

Vorzugsweise enthält die Anfrage einen Zeitpunkt, zu dem die Referenzmessgröße gemessen werden soll, wobei der zweite Messapparat die Referenzmessgröße zu dem Zeitpunkt oder möglichst zeitnah zu dem Zeitpunkt misst. Zu diesem Zweck kann der zweite Messapparat mit einer Uhr ausgestattet sein, die der zweite Messapparat bevorzugt mit einer externen Zeitquelle synchronisieren kann, zum Beispiel über eine Netzwerkverbindung. Die Messung der Referenzmessgröße zu einem bestimmten Zeitpunkt ist insbesondere dann von Bedeutung, wenn ein Differenzdruck gemessen werden soll. Somit kann der erste Messapparat spezifizieren, wann der zweite Messapparat die Referenzmessgröße messen soll. Der erste Messapparat misst bevorzugt die Messgröße ebenfalls zu diesem Zeitpunkt.

Der erste Messapparat generiert bei der Ermittlung des ersten Messwerts bevorzugt einen ersten Zeitstempel, wobei der zweite Messapparat bei der Ermittlung des zweiten Messwerts einen zweiten Zeitstempel generiert, wobei eine Datenübertragung des zweiten Zeitstempels von dem zweiten Messapparat an den ersten Messapparat erfolgt, und wobei der erste Messapparat die Bestimmung des Messergebnisses unter Verwendung des ersten Messwerts und des zweiten Messwerts nur dann durchführt, falls ein Zeitunterschied zwischen dem ersten Zeitstempel und dem zweiten Zeitstempel einen maximalen Zeitabstand nicht überschreitet. Der erste Messapparat kann somit den Messwert messen und auf einen Erhalt eines zulässigen Messwerts warten, der zur Bestimmung des Messergebnisses geeignet ist. Es ist nicht zwangsläufig notwendig, dass der erste Messapparat die Referenzmessgröße von dem zweiten Messapparat aktiv abfragt wie vorangehend beschrieben, sondern es kann auch einfach der Erhalt eines zulässigen zweiten Messwerts von dem zweiten Messapparat abgewartet werden.

Es ist vorteilhaft, wenn das erfindungsgemäße Verfahren so ausgeprägt ist, dass der zweite Messapparat dem zweiten Messwert eine Kennung beifügt, und dass der erste Messapparat den zweiten Messwert anhand der Kennung als einen zulässigen Messwert erkennt. Es können also beliebige zweite Messapparate einer Messanordnung hinzugefügt werden. Wenn der erste Messapparat einen zweiten Messwert erhält und dessen Kennung erkennt, kann er den zweiten Messwert unmittelbar verfahrensgemäß verarbeiten. Eine aufwändige Neukonfiguration des Systems beim Hinzufügen eines neuen Messapparats ist folglich nicht notwendig.

Gemäß einem weiteren Aspekt der Erfindung wird eine Messanordnung zur Bestimmung eines Messergebnisses vorgeschlagen, umfassend: Einen ersten Messapparat zur Messung einer Messgröße an einer Messstelle, wobei der erste Messapparat dazu eingerichtet ist, bei der Messung der Messgröße einen ersten Messwert zu ermitteln und das Messergebnis unter Verwendung des ersten Messwerts und eines zweiten Messwerts zu bestimmen, und einen zweiten Messapparat zur Messung einer Referenzmessgröße, wobei der zweite Messapparat dazu eingerichtet ist, bei der Messung der Referenzmessgröße den zweiten Messwert zu ermitteln und eine Datenübertragung des zweiten Messwerts von dem zweiten Messapparat an den ersten Messapparat zu veranlassen, sodass der erste Messapparat das Messergebnis bestimmen kann. Dabei ist die Messgröße ein Druck in einem Behältnis wie einem Tank, einem Rohr oder dergleichen und der erste Messapparat weist einen Drucksensor auf. Erfindungsgemäß ist die Referenzmessgröße ein Abstand zwischen dem zweiten Messapparat und einem Füllpegel eines Füllmaterials in dem Behältnis, und das Messergebnis ist eine Dichte des Füllmaterials, wobei der zweite Messapparat einen Abstandssensor aufweist. Diese Messanordnung ist bevorzugt so ausgebildet, dass sie das vorangehend beschriebene Verfahren auch entsprechend seinen unterschiedlichen optionalen Varianten ausführen kann. Wenn der zweite Messapparat die Datenübertragung des zweiten Messwerts an den ersten Messapparat veranlasst, dann ist hierunter nicht zwangsläufig eine gerichtete Datenübertragung zu verstehen, bei der nur der erste Messapparat Adressat ist. Der zweite Messwert kann nämlich zum Beispiel auch in einem Broadcast-Paket versandet werden.

Die Messanordnung weist vorzugsweise mindestens einen Zusatzmessapparat auf, wobei der mindestens eine Zusatzmessapparat dazu eingerichtet ist, die Referenzmessgröße zu messen und dabei einen Zusatzmesswert zu ermitteln, wobei der mindestens eine Zusatzmessapparat dazu eingerichtet ist, den Zusatzmesswert zu versenden, wobei der erste Messapparat dazu eingerichtet ist, den Zusatzmesswert zu empfangen, und wobei der erste Messapparat dazu eingerichtet ist, vor der Bestimmung des Messergebnisses den zweiten Messwert mit dem Zusatzmesswert zu vergleichen, um den zweiten Messwert zu verwerfen und/oder zu korrigieren. Es ist erfindungsgemäß ferner möglich, dass der Zusatzmessapparat dazu eingerichtet ist, die Referenzmessgröße zu messen, mindestens einen Zusatzmesswert zu ermitteln und den Zusatzmesswert zu versenden, wobei der zweite Messapparat dazu eingerichtet ist, den Zusatzmesswert zu empfangen, und wobei der zweite Messapparat dazu eingerichtet ist, den zweiten Messwert mit dem Zusatzmesswert zu vergleichen und ein Fehlersignal auszugeben, falls eine Differenz zwischen dem zweiten Messwert und dem Zusatzmesswert einen Grenzwert überschreitet.

Gemäß einer vorteilhaften Variante der erfindungsgemäßen Messanordnung ist der erste Messapparat dazu eingerichtet, zusätzlich zu der Messgröße die Referenzmessgröße zu messen und dabei einen dritten Messwert zu ermitteln, wobei der erste Messapparat dazu eingerichtet ist, den dritten Messwert zu versenden, und wobei die Messanordnung ferner mindestens einen dritten Messapparat aufweist, der dazu eingerichtet ist, den dritten Messwert zu empfangen. Der erste Messapparat muss bei dieser Variante der Messanordnung einen Sensor zur Messung der Referenzmessgröße aufweisen.

Vorzugsweise ist der erste Messapparat dazu eingerichtet, eine Anfrage zu verschicken, und der zweite Messapparat ist dazu eingerichtet, die Anfrage zu empfangen und daraufhin die Referenzmessgröße zu messen, um den zweiten Messwert zu ermitteln. Es ist erfindungsgemäß möglich, dass die Anfrage einen Zeitpunkt enthält, zu dem die Referenzmessgröße gemessen werden soll, wobei der zweite Messapparat dazu eingerichtet ist, die Referenzmessgröße zu dem Zeitpunkt oder möglichst zeitnah zu dem Zeitpunkt zu messen.

Bevorzugt ist der erste Messapparat dazu eingerichtet, bei der Ermittlung des ersten Messwerts einen ersten Zeitstempel zu generieren, der zweite Messapparat ist dazu eingerichtet, bei der Ermittlung des zweiten Messwerts einen zweiten Zeitstempel zu generieren, der zweite Messapparat ist dazu eingerichtet, den zweiten Zeitstempel zu versenden, der erste Messapparat ist dazu eingerichtet, den zweiten Zeitstempel zu empfangen, und der erste Messapparat ist dazu eingerichtet, die Bestimmung des Messergebnisses unter Verwendung des ersten Messwerts und des zweiten Messwerts nur dann durchzuführen, falls ein Zeitunterschied zwischen dem ersten Zeitstempel und dem zweiten Zeitstempel einen maximalen Zeitabstand nicht überschreitet. Besonders bevorzugt ist der zweite Messapparat dazu eingerichtet, dem zweiten Messwert eine Kennung beizufügen, und der erste Messapparat ist dazu eingerichtet, den zweiten Messwert anhand der Kennung als einen zulässigen Messwert zu erkennen.

Es versteht sich, dass die Messanordnung weitere Einrichtungen aufweisen kann, die zur Durchführung des vorhergehend beschriebenen Verfahrens dienlich sind. So kann die Messanordnung erfindungsgemäß Kommunikationsleitungen aufweisen. Diese können die Messapparate miteinander direkt oder indirekt verbinden. Die Messanordnung kann ferner eine Steuereinheit aufweisen. Dies kann Daten von den Messapparaten abfragen und an diese versenden, sowie als Kommunikationsknotenpunkt dienen, der zwischen die Messapparate geschaltet ist.

Die Zeichnungen dienen der Erläuterung. Dabei zeigt:
Fig. 1 eine schematische Darstellung einer ersten, nicht zur Erfindung gehörigen Messanordnung zur Messung eines Relativdrucks,
Fig. 2 eine schematische Darstellung einer zweiten, nicht zur Erfindung gehörigen Messanordnung zur Messung eines Differenzdrucks,
Fig. 3 eine schematische Darstellung einer dritten Messanordnung im Sinne der Erfindung zur Messung einer Dichte und
Fig. 4 ein Flussdiagramm, das erfindungsgemäße Verfahrensschritte darstellt.

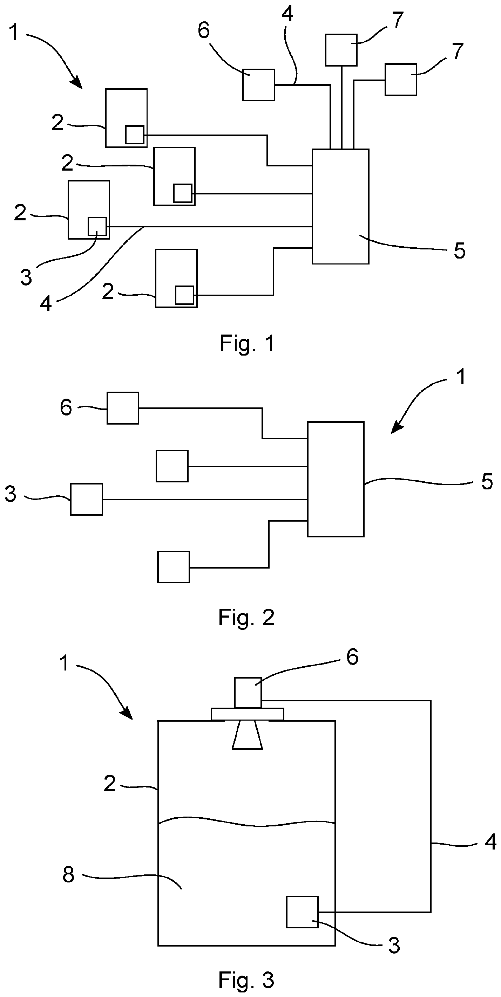

Fig. 1 zeigt eine schematische Darstellung einer ersten Messanordnung 1 zur Messung eines Relativdrucks, die nicht zur Erfindung gehörig ist. Es sind mehrere Behältnisse 2 dargestellt. In jedem Behältnis 2 ist ein erster Messapparat 3 angeordnet. Der erste Messapparat 3 weist einen Sensor zur Messung eines Absolutdrucks auf. Jeder der ersten Messapparate 3 ist über eine Kommunikationsleitung 4 mit einer Steuereinheit 5 verbunden. An die Steuereinheit 5 ist über eine weitere Kommunikationsleitung 4 ein zweiter Messapparat 6 angeschlossen. Der zweite Messapparat 6 weist ebenfalls einen Sensor zur Messung eines Absolutdrucks auf. Der zweite Messapparat 6 ist gemäß der dargestellten Messanordnung 1 im Freien angeordnet, sodass er einen Atmosphärendruck messen kann. Der erste Messapparat 3 misst einen Absolutdruck einer Flüssigkeit in dem Behältnis 2, wobei er einen ersten Messwert ermittelt. Der zweite Messapparat 6 misst den Atmosphärendruck und ermittelt dabei einen zweiten Messwert. Der zweite Messapparat 6 überträgt den zweiten Messwert über die Steuereinheit 5 und die Kommunikationsleitungen 4 an den ersten Messapparat 3. Der erste Messapparat 3 subtrahiert den zweiten Messwert von dem ersten Messwert und erhält somit einen Relativdruck der Flüssigkeit in dem Behältnis 2. Aus dem Relativdruck leitet der erste Messapparat einen Füllstand der Flüssigkeit in dem Behältnis ab.

Die Messanordnung weist ferner zwei Zusatzmessapparate 7 auf. Die Zusatzmessapparate 7 weisen Sensoren zur Messung eines Absolutdrucks auf und sind wie der zweite Messapparat 6 so angeordnet, dass sie einen Atmosphärendruck messen können. Die Zusatzmessapparate 7 ermitteln jeweils einen Zusatzmesswert. Die beiden Zusatzmesswerte werden über die Kommunikationsleitungen 4 und die Steuereinheit 5 an den ersten Messapparat 3 übertragen. Der erste Messapparat 3 nutzt die Zusatzmesswerte, um zu kontrollieren, ob der zweite Messwert, den der erste Messapparat 3 von dem zweiten Messapparat 6 erhalten hat, korrekt ist. Der erste Messapparat 3 führt dazu ein 2oo3-Voting durch. Dazu berücksichtigt er den zweiten Messwert und die beiden Zusatzmesswerte. So kann beispielsweise der zweite Messwert verworfen werden, falls er von den beiden Zusatzmesswerten zu stark abweicht. Gemäß einem anderen Betriebsmodus des ersten Messapparats 3 bildet der erste Messapparat 3 einen Mittelwert aus dem zweiten Messwert und den beiden Zusatzmesswerten und korrigiert auf diese Weise den zweiten Messwert. Die Zusatzmessapparate 7 übermitteln die Zusatzmesswerte auch an den zweiten Messapparat 6. Ferner übermittelt der zweite Messapparat 6 den zweiten Messwert, den er ermittelt hat, an die Zusatzmessapparate 7. Die Messapparate überprüfen erhaltene Messwerte mit selbst ermittelten Messwerten. Auf diese Weise können der zweite Messapparat 6 und die Zusatzmessapparate 7 überprüfen, ob sie noch zulässige Messwerte ermitteln. Falls sich die Messwerte zu stark voneinander unterscheiden, dann kann dies auf eine Fehlfunktion hinweisen.

Fig. 2 zeigt eine schematische Darstellung einer zweiten Messanordnung 1 zur Messung eines Differenzdrucks, die nicht zur Erfindung gehörig ist. Die Messanordnung 1 weist mehrere Messapparate gleichartigen Aufbaus auf. Einer der Messapparate ist ein erster Messapparat 3, der einen Differenzdruck bestimmen soll. Er verschickt eine Anfrage über ein Netzwerk, das durch eine Steuereinheit 5 und eine Vielzahl daran angeschlossener Messapparate gebildet wird, an einen zweiten Messapparat. In der Anfrage wird ein Zeitpunkt angegeben, zu dem der zweite Messapparat einen Druck messen soll. Der erste Messapparat 3 misst zu dem Zeitpunkt einen Absolutdruck, wobei er einen ersten Messwert ermittelt.

Der zweiter Messapparat 6 misst zu dem Zeitpunkt ebenfalls einen Absolutdruck, wobei er einen zweiten Messwert ermittelt. Der zweite Messapparat 6 übermittelt den zweiten Messwert über das Netzwerk an den ersten Messapparat 3. Der erste Messapparat 3 bildet eine Differenz zwischen dem ersten Messwert und dem zweiten Messwert und bestimmt auf diese Weise den Differenzdruck.

Fig. 3 zeigt eine schematische Darstellung einer dritten Messanordnung 1 zur Messung einer Dichte im Sinne der vorliegenden Erfindung. In einem Behältnis 2 befindet sich eine Flüssigkeit 8, deren Dichte bestimmt werden soll. In dem Behältnis ist ein erster Messapparat 3 angeordnet, der einen Drucksensor aufweist. Der Messapparat 3 ist über eine Kommunikationsleitung 4 mit einem zweiten Messapparat 6 verbunden. Der erste Messapparat 3 misst einen Druck der Flüssigkeit 8, wobei er einen ersten Messwert bestimmt. Der zweite Messapparat 6 ist ein Radar-Abstandssensor. Er misst einen Abstand zwischen dem zweiten Messapparat 6 und einer Oberfläche der Flüssigkeit 8, wobei er einen zweiten Messwert bestimmt. Der zweite Messapparat 6 übermittelt den zweiten Messwert über die Kommunikationsleitung 4 an den ersten Messapparat 3. Der erste Messapparat 3 bestimmt auf Grundlage des ersten Messwerts und des zweiten Messwerts im Anschluss eine Dichte der Flüssigkeit 8.

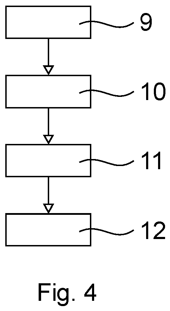

Fig. 4 zeigt ein Flussdiagramm, das erfindungsgemäße Verfahrensschritte darstellt. In einem ersten Messschritt 9 misst ein erster Messapparat eine Messgröße. Bei der Messung der Messgröße ergibt sich ein erster Messwert. In einem zweiten Messschritt 10 misst ein zweiter Messapparat eine Referenzmessgröße. Bei der Messung der Referenzmessgröße ergibt sich ein zweiter Messwert. Es ist zu beachten, dass der erste Messschritt 9 und der zweite Messschritt 10 nicht zwangsläufig in der dargestellten Reihenfolge durchgeführt werden müssen, sondern in ihrer Reihenfolge auch vertauscht sein können oder die beiden Schritte gleichzeitig durchgeführt werden können.

In einem Übertragungsschritt 11 erfolgt eine Datenübertragung des zweiten Messwerts von dem zweiten Messapparat an den ersten Messapparat. Dies kann beispielsweise über ein drahtgebundenes Netzwerk oder über eine drahtlose Datenverbindung erfolgen. Es ist anzumerken, dass der Übertragungsschritt 11 nicht zwangsläufig nach dem ersten Messschritt 9 durchgeführt werden muss, denn es ist auch möglich, dass der erste Messapparat den ersten Messwert erst bestimmt, nachdem er den zweiten Messwert erhalten hat. Nach der Bestimmung des ersten Messwerts und dem Erhalt des zweiten Messwerts bestimmt der erste Messapparat in einem Bestimmungsschritt 12 ein Messergebnis aus dem ersten Messwert und dem zweiten Messwert. Das Messergebnis ist eine Dichte einer Flüssigkeit, entsprechend der in Fig. 3 vorgestellten Ausführungsform der Erfindung.

### Bezugszeichenliste

- 1: Messanordnung
- 2: Behältnis
- 3: Erster Messapparat
- 4: Kommunikationsleitung
- 5: Steuereinheit
- 6: Zweiter Messapparat
- 7: Zusatzmessapparat
- 8: Flüssigkeit
- 9: Erster Messschritt
- 10: Zweiter Messschritt
- 11: Übertragungsschritt
- 12: Bestimmungsschritt

## Patentansprüche

1. Messverfahren zur Bestimmung eines Messergebnisses, umfassend die Schritte:
- Messung einer Messgröße durch einen ersten Messapparat (3) an einer Messstelle, wobei der erste Messapparat (3) einen ersten Messwert ermittelt,
- Messung einer Referenzmessgröße durch einen zweiten Messapparat (6), wobei der zweite Messapparat (6) einen zweiten Messwert ermittelt,
- Datenübertragung des zweiten Messwerts von dem zweiten Messapparat (6) an den ersten Messapparat (3) und
- Bestimmung des Messergebnisses durch den ersten Messapparat (3) unter Verwendung des ersten Messwerts und des zweiten Messwerts,
wobei die Messgröße ein Druck in einem Behältnis (2) wie einem Tank, einem Rohr oder dergleichen ist und wobei der erste Messapparat (3) einen Drucksensor aufweist,
**dadurch gekennzeichnet, dass**
die Referenzmessgröße ein Abstand zwischen dem zweiten Messapparat (6) und einem Füllpegel eines Füllmaterials in dem Behältnis (2) ist, und dass das Messergebnis eine Dichte des Füllmaterials ist, wobei der zweite Messapparat (6) einen Abstandssensor aufweist.

2. Messverfahren nach Anspruch 1, **dadurch gekennzeichnet, dass** mindestens ein Zusatzmessapparat (7) die Referenzmessgröße misst, wobei der mindestens eine Zusatzmessapparat (7) einen Zusatzmesswert ermittelt, wobei eine Datenübertragung des Zusatzmesswerts von dem Zusatzmessapparat (7) an den ersten Messapparat (3) erfolgt, und wobei der erste Messapparat (3) vor der Bestimmung des Messergebnisses den zweiten Messwert mit dem Zusatzmesswert vergleicht, um den zweiten Messwert zu verwerfen und/oder zu korrigieren.

3. Messverfahren nach Anspruch 1, **dadurch gekennzeichnet, dass** mindestens ein Zusatzmessapparat (7) die Referenzmessgröße misst, wobei der mindestens eine Zusatzmessapparat (7) einen Zusatzmesswert ermittelt, wobei eine Datenübertragung des Zusatzmesswerts von dem Zusatzmessapparat (7) an den zweiten Messapparat (6) erfolgt, und wobei der zweite Messapparat (6) den zweiten Messwert mit dem Zusatzmesswert vergleicht und ein Fehlersignal ausgibt, falls eine Differenz zwischen dem zweiten Messwert und dem Zusatzmesswert einen Grenzwert überschreitet.

4. Messverfahren nach einem der vorhergehenden Ansprüche, **dadurch gekennzeichnet, dass** der erste Messapparat (3) zusätzlich zu der Messgröße die Referenzmessgröße misst, wobei der erste Messapparat (3) einen dritten Messwert ermittelt, und wobei eine Datenübertragung des dritten Messwerts von dem ersten Messapparat (3) an mindestens einen dritten Messapparat erfolgt.

5. Messverfahren nach einem der vorhergehenden Ansprüche, **dadurch gekennzeichnet, dass** der erste Messapparat (3) eine Anfrage verschickt, woraufhin der zweite Messapparat (6) die Anfrage empfängt und die Referenzmessgröße misst, um den zweiten Messwert zu ermitteln.

6. Messverfahren nach Anspruch 5, **dadurch gekennzeichnet, dass** die Anfrage einen Zeitpunkt enthält, zu dem die Referenzmessgröße gemessen werden soll, wobei der zweite Messapparat (6) die Referenzmessgröße zu dem Zeitpunkt oder möglichst zeitnah zu dem Zeitpunkt misst.

7. Messverfahren nach einem der vorhergehenden Ansprüche, **dadurch gekennzeichnet, dass** der erste Messapparat (3) bei der Ermittlung des ersten Messwerts einen ersten Zeitstempel generiert, wobei der zweite Messapparat (6) bei der Ermittlung des zweiten Messwerts einen zweiten Zeitstempel generiert, wobei eine Datenübertragung des zweiten Zeitstempels von dem zweiten Messapparat (6) an den ersten Messapparat (3) erfolgt, und wobei der erste Messapparat (3) die Bestimmung des Messergebnisses unter Verwendung des ersten Messwerts und des zweiten Messwerts nur dann durchführt, falls ein Zeitunterschied zwischen dem ersten Zeitstempel und dem zweiten Zeitstempel einen maximalen Zeitabstand nicht überschreitet.

8. Messverfahren nach einem der vorhergehenden Ansprüche, **dadurch gekennzeichnet, dass** der zweite Messapparat dem zweiten Messwert eine Kennung beifügt, und dass der erste Messapparat den zweiten Messwert anhand der Kennung als einen zulässigen Messwert erkennt.

9. Messanordnung (1) zur Bestimmung eines Messergebnisses, umfassend:
- einen ersten Messapparat (3) zur Messung einer Messgröße an einer Messstelle, wobei der erste Messapparat (3) dazu eingerichtet ist, bei der Messung der Messgröße einen ersten Messwert zu ermitteln und das Messergebnis unter Verwendung des ersten Messwerts und eines zweiten Messwerts zu bestimmen, und
- einen zweiten Messapparat (6) zur Messung einer Referenzmessgröße, wobei der zweite Messapparat (6) dazu eingerichtet ist, bei der Messung der Referenzmessgröße den zweiten Messwert zu ermitteln und eine Datenübertragung des zweiten Messwerts von dem zweiten Messapparat (6) an den ersten Messapparat (3) zu veranlassen, sodass der erste Messapparat (3) das Messergebnis bestimmen kann,
wobei die Messgröße ein Druck in einem Behältnis (2) wie einem Tank, einem Rohr oder dergleichen ist und wobei der erste Messapparat (3) einen Drucksensor aufweist,
**dadurch gekennzeichnet, dass**
die Referenzmessgröße ein Abstand zwischen dem zweiten Messapparat (6) und einem Füllpegel eines Füllmaterials in dem Behältnis (2) ist, und dass das Messergebnis eine Dichte des Füllmaterials ist, wobei der zweite Messapparat (6) einen Abstandssensor aufweist.

## Claims

1. A measuring method for determining a measurement result, comprising the steps of:
- measuring a measuring quantity by means of a first measuring device (3) at a measuring point, wherein the first measuring device (3) detects a first measurement value,
- measuring a reference measuring quantity by means of a second measuring device (6), wherein the second measuring device (6) detects a second measurement value,
- data transmission of the second measurement value from the second measuring device (6) to the first measuring device (3), and
- determination of the measurement result by the first measuring device (3) using the first measurement value and the second measurement value,
wherein, the measuring quantity is a pressure in a container (2), such as a tank, a pipe or the like and wherein the first measuring device (3) has a pressure sensor
**characterized in that**
the reference measuring quantity is a distance between the second measuring device (6) and a filling level of a filling material in the container (2), and that the measurement result is a density of the filling material, wherein the second measuring device (6) has a distance sensor.

2. The measuring method according to claim 1, **characterized in that** at least one additional measuring device (7) measures the reference measuring quantity, wherein the at least one additional measuring device (7) detects an additional measurement value, wherein a data transmission of the additional measurement value from the additional measuring device (7) to the first measuring device (3) takes place, and wherein the first measuring device (3) compares the second measurement value with the additional measurement value prior to the determination of the measurement result in order to discard and/or correct the second measurement value.

3. The measuring method according to claim 1, **characterized in that** at least one additional measuring device (7) measures the reference measuring quantity, wherein the at least one additional measuring device (7) detects an additional measurement value, wherein a data transmission of the additional measurement value from the additional measuring device (7) to the second measuring device (6) takes place, and wherein the second measuring device (6) compares the second measurement value with the additional measurement value and outputs an error signal if a difference between the second measurement value and the additional measurement value exceeds a threshold value.

4. The measuring method according to any one of the preceding claims, **characterized in that** the first measuring device (3), in addition to the measuring quantity, measures the reference measuring quantity, wherein the first measuring device (3) detects a third measurement value, and wherein a data transmission of the third measurement value from the first measuring device (3) to at least one third measuring device takes place.

5. The measuring method according to any one of the preceding claims, **characterized in that** the first measuring device (3) sends a request, whereupon the second measuring device (6) receives the request and measures the reference measuring quantity in order to detect the second measurement value.

6. The measuring method according to claim 5, **characterized in that** the request contains a point in time at which the reference measuring quantity is to be measured, wherein the second measuring device (6) measures the reference measuring quantity at the point in time or as closely as possible to the point in time.

7. The measuring method according to any one of the preceding claims, **characterized in that** the first measuring device (3) generates a first time stamp during the detection of the first measurement value, wherein the second measuring device (6) generates a second time stamp during the detection of the second measurement value, wherein a data transmission of the second time stamp from the second measuring device (6) to the first measuring device (3) takes place, and wherein the first measuring device (3) carries out the determination of the measurement result, using the first measurement value and the second measurement value, only if a difference in time between the first time stamp and the second time stamp does not exceed a maximum time interval.

8. The measuring method according to any one of the preceding claims, **characterized in that** the second measuring device adds an identifier to the second measurement value, and that the first measuring device recognizes the second measurement value as an admissible measurement value based on the identifier.

9. A measuring assembly (1) for determining a measurement result, comprising:
- a first measuring device (3) for measuring a measuring quantity at a measuring point, wherein the first measuring device (3) is configured for detecting a first measurement value during the measurement of the measuring quantity and for determining the measurement result using the first measurement value and a second measurement value, and
- a second measuring device (6) for measuring a reference measuring quantity, wherein the second measuring device (6) is configured for detecting the second measurement value during the measurement of the reference measuring quantity and for causing a data transmission of the second measurement value from the second measuring device (6) to the first measuring device (3), so that the first measuring device (3) can determine the measurement result
wherein, the measuring quantity is a pressure in a container (2), such as a tank, a pipe or the like and wherein the first measuring device (3) has a pressure sensor
**characterized in that**
the reference measuring quantity is a distance between the second measuring device (6) and a filling level of a filling material in the container (2), and that the measurement result is a density of the filling material, wherein the second measuring device (6) has a distance sensor.

## Revendications

1. Procédé de mesure pour déterminer un résultat de mesure, comprenant les étapes consistant à:
- mesurer une grandeur de mesure par un premier appareil de mesure (3) sur un point de mesure, dans lequel le premier appareil de mesure (3) détermine une première valeur de mesure,
- mesurer une grandeur de mesure de référence par un deuxième appareil de mesure (6), dans lequel le deuxième appareil de mesure (6) détermine une deuxième valeur de mesure,
- transmettre de données de la deuxième valeur de mesure du deuxième appareil de mesure (6) au premier appareil de mesure (3) et
- déterminer le résultat de mesure par le premier appareil de mesure (3) en utilisant la première valeur de mesure et la deuxième valeur de mesure,
dans lequel la grandeur de mesure est une pression dans un récipient (2) tel qu'un réservoir, un tuyau ou similaire et dans lequel le premier appareil de mesure (3) comprend un capteur de pression,
**caractérisé par le fait que**
la grandeur de mesure de référence est une distance entre le deuxième appareil de mesure (6) et un niveau de remplissage d'un matériau de remplissage dans le récipient (2), et que le résultat de mesure est une densité du matériau de remplissage, dans lequel le deuxième appareil de mesure (6) comprend un capteur de distance.

2. Procédé de mesure selon la revendication 1, **caractérisé par le fait qu'au** moins un appareil de mesure supplémentaire (7) mesure la grandeur de mesure de référence, dans lequel ledit au moins un appareil de mesure supplémentaire (7) détermine une valeur de mesure supplémentaire, dans lequel il y a une transmission de données de la valeur de mesure supplémentaire de l'appareil de mesure supplémentaire (7) au premier appareil de mesure (3), et dans lequel le premier appareil de mesure (3) compare la deuxième valeur de mesure à la valeur de mesure supplémentaire avant de déterminer le résultat de mesure, afin de rejeter et/ou de corriger la deuxième valeur de mesure.

3. Procédé de mesure selon la revendication 1, **caractérisé par le fait qu'au** moins un appareil de mesure supplémentaire (7) mesure la grandeur de mesure de référence, dans lequel ledit au moins un appareil de mesure supplémentaire (7) détermine une valeur de mesure supplémentaire, dans lequel il y a une transmission de données de la valeur de mesure supplémentaire de l'appareil de mesure supplémentaire (7) au deuxième appareil de mesure (6), et dans lequel le deuxième appareil de mesure (6) compare la deuxième valeur de mesure à la valeur de mesure supplémentaire et émet un signal d'erreur si une différence entre la deuxième valeur de mesure et la valeur de mesure supplémentaire dépasse une valeur limite.

4. Procédé de mesure selon l'une quelconque des revendications précédentes, **caractérisé par le fait que** le premier appareil de mesure (3) mesure la grandeur de mesure de référence en plus de la grandeur de mesure, dans lequel le premier appareil de mesure (3) détermine une troisième valeur de mesure, et dans lequel il y a une transmission de données de la troisième valeur de mesure du premier appareil de mesure (3) à au moins un troisième appareil de mesure.

5. Procédé de mesure selon l'une quelconque des revendications précédentes, **caractérisé par le fait que** le premier appareil de mesure (3) envoie une demande ce après quoi le deuxième appareil de mesure (6) reçoit la demande et mesure la grandeur de mesure de référence afin de déterminer la deuxième valeur de mesure.

6. Procédé de mesure selon la revendication 5, **caractérisé par le fait que** la demande contient un instant auquel la grandeur de mesure de référence doit être mesurée, dans lequel le deuxième appareil de mesure (6) mesure la grandeur de mesure de référence à l'instant ou le plus près possible de l'instant.

7. Procédé de mesure selon l'une quelconque des revendications précédentes, **caractérisé par le fait que** le premier appareil de mesure (3) génère un premier horodatage lors de la détermination de la première valeur de mesure, dans lequel le deuxième appareil de mesure (6) génère un deuxième horodatage lors de la détermination de la deuxième valeur de mesure, dans lequel il y a une transmission de données du deuxième horodatage du deuxième appareil de mesure (6) au premier appareil de mesure (3), et dans lequel le premier appareil de mesure (3) n'effectue la détermination du résultat de mesure en utilisant la première valeur de mesure et la deuxième valeur de mesure que si une différence de temps entre le premier horodatage et le deuxième horodatage ne dépasse pas un intervalle de temps maximal.

8. Procédé de mesure selon l'une quelconque des revendications précédentes, **caractérisé par le fait que** le deuxième appareil de mesure ajoute un identifiant à la deuxième valeur de mesure, et que le premier appareil de mesure reconnaît la deuxième valeur de mesure comme une valeur de mesure admissible sur la base de l'identifiant.

9. Ensemble de mesure (1) pour déterminer un résultat de mesure, comprenant:
- un premier appareil de mesure (3) pour mesurer une grandeur de mesure sur un point de mesure, dans lequel le premier appareil de mesure (3) est configuré pour déterminer une première valeur de mesure lors de la mesure de la grandeur de mesure et pour déterminer le résultat de mesure en utilisant la première valeur de mesure et une deuxième valeur de mesure, et
- un deuxième appareil de mesure (6) pour mesurer une grandeur de mesure de référence, dans lequel le deuxième appareil de mesure (6) est configuré pour déterminer la deuxième valeur de mesure lors de la mesure de la grandeur de mesure de référence et pour provoquer une transmission de données de la deuxième valeur de mesure du deuxième appareil de mesure (6) au premier appareil de mesure (3) de sorte que le premier appareil mesure (3) peut déterminer le résultat de mesure,
dans lequel la grandeur de mesure est une pression dans un récipient (2) tel qu'un réservoir, un tuyau ou similaire et dans lequel le premier appareil de mesure (3) comprend un capteur de pression,
**caractérisé par le fait que**
la grandeur de mesure de référence est une distance entre le deuxième appareil de mesure (6) et un niveau de remplissage d'un matériau de remplissage dans le récipient (2), et que le résultat de mesure est une densité du matériau de remplissage, dans lequel le deuxième appareil de mesure (6) comprend un capteur de distance.
